# FASCICULE DE BREVET EUROPEEN

(11) **EP 0 469 949 B1**
(45) Date de publication et mention de la délivrance du brevet: **09.11.1994**
(21) Numéro de dépôt: 91401982.3
(22) Date de dépôt: 16.07.1991
(51) Int. Cl.: F16L 37/08

(54) **Dispositif pour l'assemblage rapide d'une durite à un échangeur de chaleur d'un véhicule automobile**
Vorrichtung zur schnellen Verbindung eines Schlauches mit einem Automobilwärmetauscher
Quick-acting type coupling for the connection of a hose to a car heat exchanger

(30) Priorité: 31.07.1990 FR 9009736
(43) Date de publication de la demande: 05.02.1992
(73) Titulaire: HUTCHINSON S.A. une Société Anonyme dotée d'un Conseil de Surveillance et d'un Directoire, F-75008 Paris (FR); VALEO THERMIQUE MOTEUR, 78320 Le Mesnil Saint-Denis (FR)
(72) Inventeur: Godeau, Denis, F-45260 Vieilles Maisons sur Joudry (FR)
(74) Mandataire: Orès, Bernard

(56) Documents cités:
- DE-C- 3 702 246
- FR-A- 2 626 662
- GB-A- 2 217 417
- US-A- 4 589 684

## Description

L'invention est relative à un dispositif pour l'assemblage rapide par encliquetage d'une durite et d'un échangeur de chaleur de véhicule automobile.

La Demande de Brevet FR-A-2 626 662 décrit un dispositif d'assemblage d'un raccord tubulaire à une boîte à eau d'échangeur de chaleur de véhicule automobile à l'aide d'une liaison élastique facilement démontable. La boîte à eau et le raccord tubulaire sont maintenus assemblés par au moins une patte portée par le raccord tubulaire , orientée axialement et pourvue d'une dent d'encliquetage à son extrémité axialement interne. Cette dent d'encliquetage qui vient en butée contre l'extrémité axialement externe d'une oreille tubulaire de guidage, -dans laquelle s'enfile la patte-, présente la forme d'un hameçon pour éviter le désassemblage sous l'effet des à-coups de pression inhérents au fonctionnement du circuit de refroidissement associé au moteur du véhicule et pour que la dent puisse s'encliqueter sur l'extrémité axialement externe de l'oreille tubulaire de guidage et de butée, un jeu axial important est nécessaire.

Dans le dispositif d'assemblage décrit dans la Demande de Brevet FR-A-2 626 662 la boîte à eau d'un échangeur de chaleur et le raccord tubulaire sont maintenus assemblés à l'aide de deux pattes élastiques radialement, portées par une bague logée à l'intérieur de la boîte à eau dans une gorge semi-circulaire de celle-ci et en appui à force sur un bossage opposé à cette gorge, les bagues s'encliquetant dans des encoches ménagées sur l'extrémité du raccord tubulaire qui est ajouré sur une portion périphérique comprise entre les encoches. Dans cette réalisation, la partie la plus fragile de l'assemblage est disposée à l'intérieur de la boîte à eau et aucun moyen visuel ne permet de vérifier que l'assemblage est correctement établi.

Dans la Demande de Brevet FR-A-2 646 697, qui a elle aussi pour objet un dispositif d'assemblage d'un échangeur de chaleur et d'un raccord tubulaire du type général précédent, la patte portée par le raccord tubulaire et orientée axialement a la configuration d'un ressort à lame, sensiblement en forme de U, dont une branche fait saillie du raccord dans le sens de l'assemblage. Cette conception, plus simple que la précédente, ne comprend pas, non plus, de moyens permettant de vérifier que l'assemblage est correctement établi, ni de détecter un désassemblage intempestif partiel.

Dans la Demande de Brevet FR-A-2 660 405 (dont l'équivalent EP-A-452 172 fait partie de l'etat de la technique selon l'Art. 54(3) CBE) est décrit un dispositif d'assemblage d'un échangeur de chaleur à un raccord tubulaire dans lequel une bague de verrouillage est munie d'ergots radiaux qui s'encliquètent dans des logements correspondants ménages dans deux embouts qui s'emboîtent l'un dans l'autre et qui sont solidarisés, respectivement, au raccord tubulaire et à l'échangeur de chaleur. La bague comporte entre chaque paire d'ergots consécutifs une portion extensible équipés de moyens indiquant l'état déformé de la bague et destinés à visualiser l'état de verrouillage correct de l'assemblage. On ne dispose pas, toutefois, dans cet assemblage, de moyens de guidage facilitant la mise en place du raccord tubulaire sur ou dans la boîte à eau de l'échangeur.

La présente invention a donc pour but de fournir un dispositif d'assemblage rapide d'une durite et d'un échangeur de chaleur qui pallie les inconvénients respectifs des assemblages précités tout en conservant leurs avantages, à savoir, un assemblage et un désassemblage faciles, ne mettant en oeuvre qu'un faible effort de montage, de construction simple et peu coûteuse, la présence de moyens de contrôle visuel et de moyens de guidage, un jeu axial nécessaire à l'assemblage aussi faible que possible tout en supprimant tout risque de séparation intempestive des pièces réunies entre elles, le dispositif permettant en outre de protéger le joint d'étanchéité lors de l'opération d'assemblage tout en le rendant facilement interchangeable et imperdable. Ce but est atteint grâce à la partie caractérisante de la revendication 1.

Dans un mode préféré de mise en oeuvre du dispositif selon l'invention, la bague comporte une courte partie cylindrique et le raccord une gorge intérieure destinée à recevoir ladite partie cylindrique de la bague.

Dans un autre mode préféré de mise en oeuvre du dispositif selon l'invention, la bague est pourvue d'au moins une languette élastique, qui sert de témoin complémentaire d'encliquetage, et le raccord est pourvu d'au moins une fente traversante positionnée de manière telle que la languette vienne en face de cette fente et se déploie à l'extérieur lorsque le raccord est encliqueté dans l'embout, la languette restant comprimée et masquée tant que l'encliquetage n'est pas réalisé.

Selon une autre variante de l'invention, le dispositif comporte un ressort maintenant la bague repoussée vers l'extrémité libre du raccord en l'absence de sollicitation extérieure.

L'invention prévoit aussi que la bague ou du moins sa surface extérieure, est de couleur contrastée par rapport à l'embout.

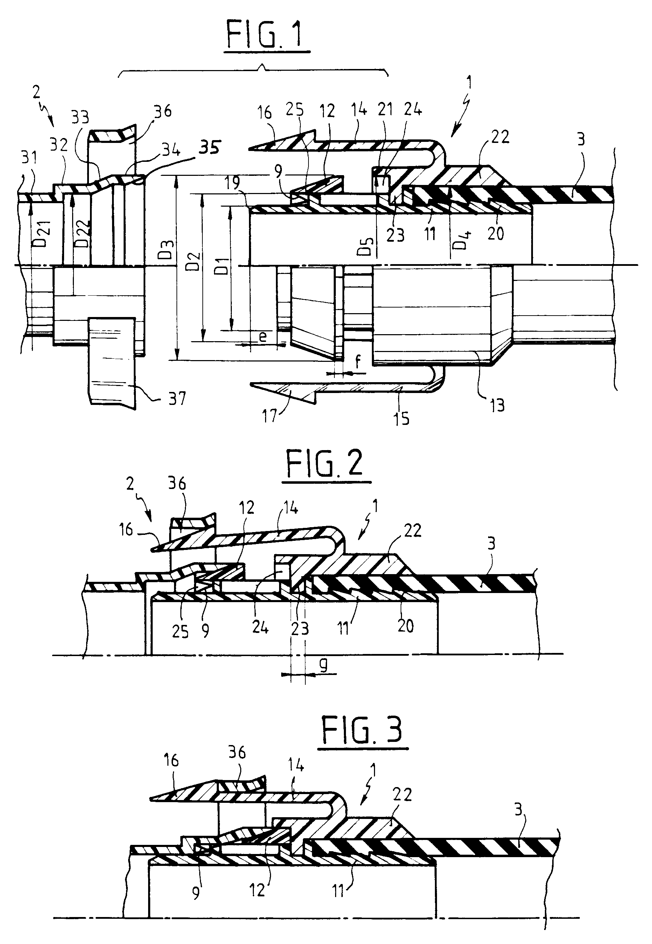

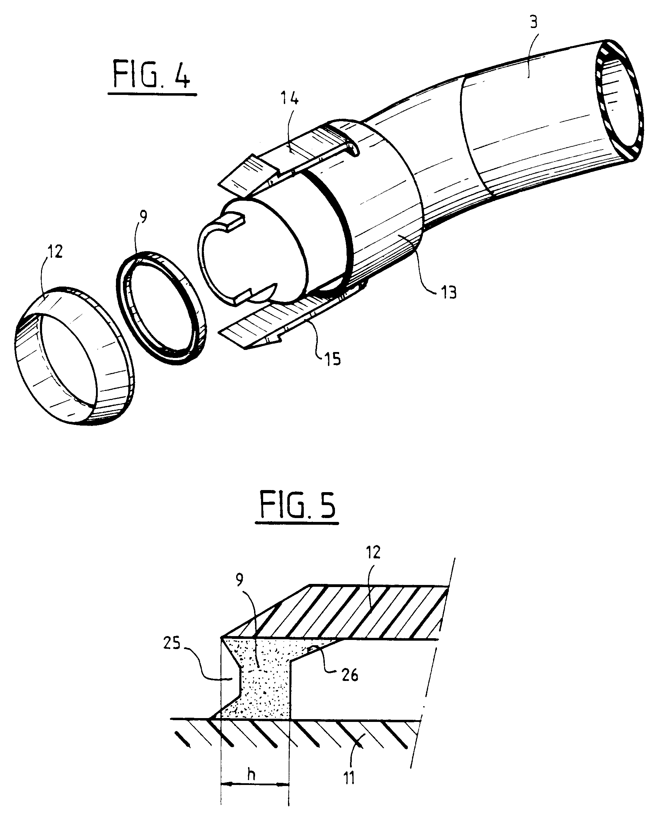

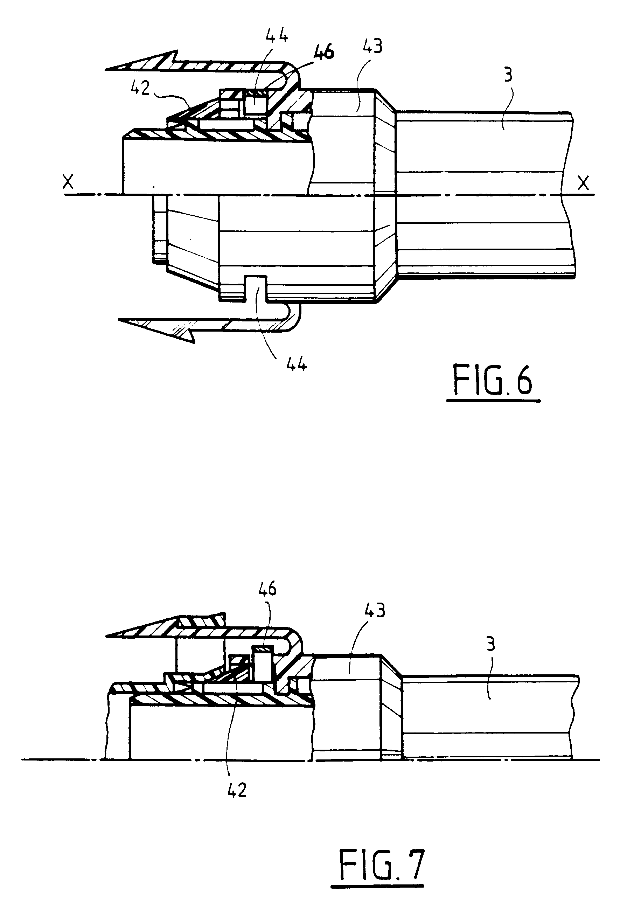

L'invention sera bien comprise par la description qui suit, faite en référence au dessin annexé dans lequel :
. la figure 1 est une vue en élévation latérale et partiellement en coupe axiale d'un dispositif selon l'invention avant assemblage ;
. la figure 2 est une vue partielle en coupe axiale du même dispositif en cours d'assemblage ;
. la figure 3 est une vue partielle en coupe axiale du dispositif complètement assemblé ;
. la figure 4 est une vue éclatée des divers éléments constitutifs du dispositif selon l'invention ;
. la figure 5 est une vue à plus grande échelle d'une partie de la figure 1 ; et
. les figures 6 et 7 correspondent aux figures 1 et 3, mais pour une variante du dispositif.

Le dispositif d'assemblage illustré sur la figure 1 est du type de ceux décrits dans la demande de brevet FR-A-2 626 662. Il comprend un raccord 1 propre à assurer la connexion d'une durite 3 avec un embout 2 d'une boîte à eau (non représentée) d'un échangeur de chaleur, notamment pour véhicule automobile. Le raccord 1 et l'embout de la boîte à eau sont de préférence réalisés en matière plastique et, dans la forme de réalisation décrite et représentée, le raccord 1 se compose d'un premier manchon 11, d'une bague coulissante 12, d'un second manchon porte clips 13 à deux pattes 14 et 15 élastiques radialement munies de dents d'encliquetage 16, 17 et d'un joint d'étanchéité 9 maintenu en place sur le manchon par la bague 12 tant que le raccord n'est pas assemblé avec l'embout 2 de la boîte à eau. Le manchon 11 a une forme intérieure cylindrique sur toute sa longueur, à l'exception de son extrémité libre 19 destinée à être emboîtée dans l'embout 2 de la boîte à eau et qui est échancrée semi-circulairement sur une longueur e, comme bien visible aux figures 1 et 4, tandis que son autre extrémité 20, sur laquelle est fixée la durite 3, est munie sur une portion de sa longueur de crans d'accrochage de ladite durite.

La surface extérieure de la partie d'extrémité du manchon 11 destinée à coopérer avec l'embout de la boîte à eau est cylindrique à l'exception de son extrémité libre correspondant à l'échancrure précitée de longueur e. Entre ses extrémités avant et arrière le manchon 11 comporte une partie centrale dont la surface extérieure est également cylindrique sur sa plus grande partie, de diamètre extérieur D2, supérieur au diamètre extérieur D1 de son extrémité avant et de la portion non crantée de son extrémité arrière, à l'exception du logement d'un ressort (non illustré) sollicitant la bague 12 vers la position montrée sur la figure 1.

La bague 12 a une surface intérieure cylindrique de diamètre égal à D2 au jeu nécessaire près et une surface extérieure de forme générale tronconique se terminant, du côté de plus grand diamètre, D3, par une partie, cylindrique, de même diamètre D3 et de faible longueur f.

Le manchon porte-clips 13, qui peut être réalisé par moulage d'une seule pièce avec le manchon 11, a une forme extérieure générale cylindrique. Sa surface intérieure comporte deux parties 21, 22, cylindriques, de diamètres internes différents, respectivement D4 et D5, séparées par une nervure cylindrique 23 de très courte longueur g et de diamètre intérieur sensiblement égal au diamètre extérieur D1 du manchon pour définir deux épaulements annulaires entre les parties 21 et 22.

L'extrémité du tuyau auquel le raccord est solidarisé pst insérée dans le volume annulaire défini par la partie 22, de diamètre D4 légèrement supérieur à D1, et l'extrémité arrière du manchon 11.

La partie 21 a un diamètre intérieur sensiblement égal à D3 au jeu nécessaire près et une longueur égale ou légèrement supérieure à celle, f, de la partie cylindrique de la bague 12.

Que le manchon 13 soit moulé d'une pièce avec le manchon 11 ou qu'il soit rapporté sur ce dernier, il est dans tous les cas, positionné par rapport au manchon 11 de telle sorte que la surface intérieure de sa partie 21 définisse avec la surface externe de la partie centrale du manchon 11 une gorge 24 dans laquelle la partie cylindrique de la bague 12 peut venir s'encastrer complètement ; à cet effet, la nervure 23 du manchon 13 est en butée contre l'épaulement annulaire résultant de la différence des diamètres extérieurs des parties arrière et centrale du manchon 11.

Dans sa position avant assemblage, la bague 12 ménage, entre sa surface intérieure et la surface externe de l'extrémité libre 19 du manchon 11, une gorge annulaire 25 dans laquelle est monté le joint 9, lequel est de forme telle qu'il reste solidaire du manchon après démontage éventuel, étant de ce fait, imperdable. Comme le montre la figure 5, l'épaulement qui forme le fond de la gorge est chanfreiné en 26, favorisant ainsi le glissement de la bague 12 et de l'embout 2.

La section longitudinale de ce dernier est évolutive de manière à ménager une surface de poussée de la bague 12, et des surfaces coopérant avec l'extrémité cylindrique du raccord 1 et avec le joint 9 pour assurer l'étanchéité. Ainsi, l'embout 2 comporte successivement : une partie tubulaire cylindrique 31 de diamètre intérieur D21 égal, au jeu nécessaire près, au diamètre extérieur D1 de la partie avant du manchon 11, une partie cylindrique 32 de diamètre intérieur D22 égal à D12, et de longueur égale ou légèrement supérieure à la longueur maximale du joint 9, c'est-à-dire à la longueur h (figure 5), une première partie conique 33 évasée vers l'extrémité libre de l'embout, dont le plus petit diamètre intérieur est égal à D22 et dont la pente est sensiblement égale à celle de la bague 12, une courte partie intermédiaire cylindrique 34 de diamétre intérieur égal au plus grand diamétre de la première partie conique et une seconde partie conique 35 dont la longueur axiale, la pente et les diamètres correspondent à ceux de la partie conique de la bague 12 de telle sorte que lorsque le raccord 1 est présenté dans l'embout 2 la surface extérieure conique de la bague 12 vient s'appuyer en la tangeantant contre la surface intérieure de la seconde partie conique 35 de l'embout qui repousse la bague 12 à mesure que le raccord est enfoncé dans l'embout jusqu'à ce que la partie cylindrique de la bague soit complètement masquée, étant encastrée dans la gorge 24, la partie conique de la bague étant alors elle aussi complètement masquée par l'embout. Dans cette position relative de l'embout et du raccord, les pattes 14 et 15 qui, au cours du montage, ont glissé dans des oreilles 36, 37, dont est pourvue la surface extérieure de l'embout, en guidant le déplacement du raccord, sont encliquetées, les surfaces frontales des dents 16, 17, étant en butée contre les surfaces frontales des oreilles opposées à l'extrémité libre de l'embout, qui sont légèrement bombées en correspondance avec la creusure des surfaces frontales des dents.

La partie cylindrique 34, ménagée entre les deux parties coniques 33 et 35 de l'embout 2 de la boîte à eau, évite de détériorer les bords de la barye et du joint.

Le dispositif d'assemblage illustré aux figures 6 et 7 ne diffère de celui illustré aux figures précédentes que par la conformation de sa bague mobile 42 et par des fentes traversantes 44 dans la paroi du porte-clips 43. La bague 42 comporte une partie conique analogue à celle de la bague 12 mais pas de partie cylindrique, et elle est pourvue sur sa face frontale, perpendiculaire à l'axe XX de l'ensemble du dispositif, de deux languettes 46 élastiques (dont une seule est visible sur les figures), comprimées et donc masquées par le porte-clips 43 tant que le raccord n'est pas encliqueté dans l'embout, mais qui par contre se déploient et deviennent visibles lorsque le raccord est encliqueté, les languettes se trouvant alors en face des fentes 44. Dans cette variante de réalisation, les languettes 46 sont des témoins d'encliquetage.

Ainsi que cela ressort de ce qui précède, l'invention ne se limite nullement à ceux de ses modes de réalisation et d'application qui viennent d'être décrits de façon plus explicite. En particulier, la disposition des pattes 14 et des oreilles de butée 36, 37 peut être inversée (à savoir que les pattes peuvent être portées par la boîte à eau tandis que les oreilles peuvent être ménagées sur le raccord), sans que pour autant le résultat en soit affecté.

De plus, il est clair que les pattes faisant ressort peuvent être réalisées en une seule pièce avec le raccord (ou la boîte à eau) ou être constituées par des pattes métalliques rapportées ou surmoulées suivant les enseignements de la Demande FR-A-2 626 662 déjà évoquée plus haut.

## Revendications

1. Ensemble comportant une durite (3) et un, embout, par exemple d'entrée ou de sortie de la boite à eau d'un échangeur de chaleur, notamment de véhicule automobile, dans lequel un raccord tubulaire (1) est solidarisé à la durite (3), d'une part et est propre à coopérer, d'autre part, avec l'embout (2) par une liaison élastique facilement démontable, l'étanchéité entre le raccord tubulaire et l'embout étant assurée par un joint (9) en matériau de type élastomère et le maintien en condition assemblée du raccord et de l'embout étant assuré par au moins une patte (14, 15) pourvue d'une dent (16, 17) d'encliquetage orientée axialement et portée soit par le raccord, soit par l'embout, caractérisé en ce que l'élément (13) portant ladite patte (14, 15) est muni d'une bague (12) à surface extérieure en partie conique, mobile axialement en condition de non assemblage, et en ce que l'autre élément (2) est conformé suivant au moins une partie (34) de profil intérieur conique de même conicité que celle de la bague (12) dont est pourvu l'élément portant ladite patte (1) pour s'emboîter sur ladite bague (12) en la repoussant lors de l'assemblage, de manière à la masquer complètement lorsque les deux éléments sont assemblés, ledit joint (9) étant monté sur l'élément (1) qui porte la bague (12) de manière telle que, en condition de non assemblage, la bague (12) masque le joint (9) et le protège complètement.

2. Ensemble selon la revendication 1, caractérisé en ce que la bague (12) comporte une courte partie cylindrique et en ce que l'élément qui la porte (1) comporte une gorge intérieure (24) destinée à recevoir ladite partie cylindrique de la bague (12).

3. Ensemble selon la revendication 1 ou la revendication 2, caractérisé en ce que la bague (42) est pourvue d'au moins une languette élastique, qui sert de témoin complémentaire d'encliquetage, et en ce que l'élément qui la porte est pourvu d'au moins une fente traversante (44) positionnée de manière telle que la languette vienne en face de cette fente et se déploie à l'extérieur lorsque le raccord est encliqueté dans l'embout, la languette restant comprimée et masquée tant que l'encliquetage n'est pas réalisé.

4. Ensemble selon l'une quelconque des revendications précédentes, caractérisé en ce qu'il comporte un ressort maintenant la bague (12) repoussée vers l'extrémité libre de l'élément qui la porte (1) en l'absence de sollicitation extérieure.

5. Ensemble selon l'une quelconque des revendications précédentes, caractérisé en ce que la bague (12, 42) ou du moins sa surface extérieure, est de couleur contrastée par rapport à l'élément qui ne la porte pas (2).

## Claims

1. An assembly comprising a connector (3) and a socket, for example for the inlet to or outlet from the water tank of a heat exchanger, particularly of a motor vehicle, in which a tubular connector (1) is fixed to the connector (3) on the one hand and is adapted on the other to co-operate with the socket (2) via an easily demountable flexible joint, sealing-tightness between the tubular connector and the socket being provided by a gasket (9) of elastomer type material while maintenance of the connector and the socket in the assembled state is ensured by at least one lug (14, 15) on which there is an axially orientated click-stop tooth (16, 17) which is carried either by the connector or by the socket, characterised in that the element (13) carrying the said lug (14, 15) is provided with a ring (12) having a partly conical outer surface and adapted for axial movement in the non-assembled condition and in that the other element (2) is shaped in accordance with at least one part (34) having a conical inner profile of the same conicity as that of the ring (12) with which the element carrying the said lug (1) is provided, so that it can be fitted onto the said ring (12), pushing it back upon assembly in order it to mask it completely when the two elements are assembled, the said gasket (9) being mounted on the element (1) which carries the ring (12) in such a way that, in the non-assembled state, the ring (12) masks the gasket (9) and protects it completely.

2. An assembly according to claim 1, characterised in that the ring (12) comprises a short cylindrical part and in that the element (1) which carries it comprises an inner groove (24) adapted to receive the said cylindrical part of the ring (12).

3. An assembly according to claim 1 or claim 2, characterised in that the ring (42) is provided with at least one flexible tongue which serves as a matching click-stop indicator and in that the element which carries it is provided with at least one transverse slot (44) which is so positioned that the tongue comes to face the slot and spreads out from the outside when the connector is snap fitted into the socket, the tongue remaining compressed and masked as long as the snap engagement has not been completed.

4. An assembly according to any one of the preceding claims, characterised in that it comprises a spring maintaining the ring (12) pushed back towards the free end of the element (1) which carries it, if there is no external biasing force.

5. An assembly according to any one of the preceding claims, characterised in that the ring (12, 42) or at least its outer surface contrasts in colour with the element (2) which does not carry it.

## Patentansprüche

1. Anordnung umfassend einen sog. Durit (3) und einen Rohrstutzen, beispielsweise Eintritts- oder Austrittsstutzen des Wasserkastens eines Wärmeaustauschers, insbesondere von Kraftfahrzeugen, bei der ein röhrenförmiger Verbinder (1) an dieses sog. Durit (3) einerseits befestigt und andererseits so ausgelegt ist, daß er mit dem Stutzen oder der Muffe (2) über eine elastische leicht demontierbare Verbindung zusammenwirkt, wobei die Abdichtung zwischen dem rohrförmigen Verbinder und dem Stutzen durch eine Dichtung (9) aus Material vom Typ Elastomer sichergestellt ist und das Halten des Verbinders sowie des Stutzens im zusammengefügten Zustand durch wenigstens eine Pratze (14, 15) sichergestellt wird, die mit einem Rastzahn (16, 17) versehen ist, der axial orientiert und entweder vom Verbinder oder vom Rohrstutzen getragen ist, dadurch gekennzeichnet, daß das diese Pratze (14, 15) tragende Element (13) mit einem Ring (12) mit zum Teil konischer Außenfläche versehen ist, der achsial im Nicht-Montagezustand beweglich ist, und daß das andere Element (2) entsprechend wenigstens einem Teil (34) des konischen Innenprofils gleicher Konizität wie die des Rings (12) mit dem das die Pratze tragende Element (1) ausgestattet ist, gestaltet ist, um auf diesen Ring (12) gesteckt zu werden, indem es ihn bei der Montage derart zurückschiebt, daß er vollständig maskiert ist, wenn die beiden Elemente zusammengefügt sind, wobei diese Dichtung (9) auf dem Element (1), das den Ring (12) trägt, derart montiert ist, daß in Nicht-Montagestellung der Ring (12) die Dichtung (9) maskiert oder abdeckt und sie vollständig schützt.

2. Anordnung nach Anspruch 1, dadurch gekennzeichnet, daß der Ring (12) einen kurzen zylindrischen Teil umfaßt und daß das ihn tragende Element (1) eine Innennut (24) umfaßt, die dazu bestimmt ist, diesen zylindrischen Teil des Rings (12) aufzunehmen.

3. Anordnung nach Anspruch 1 oder Anspruch 2, dadurch gekennzeichnet, daß der Ring (42) mit wenigstens einer elastischen Zunge versehen ist, die als komplementärer Rastanzeiger dient, und daß das sie tragende Element mit wenigstens einem traversierenden Schlitz (44) versehen ist, der so positioniert ist, daß die Zunge diesem Schlitz gegenüber gelangt und sich nach außen entfaltet, wenn der Verbinder in die Muffe einrastet, wobei die Zunge, solange das Einrasten nicht realisiert ist, im komprimierten und maskierten Zustand verbleibt.

4. Anordnung nach einem der vorhergehenden Ansprüche, dadurch gekennzeichnet, daß sie eine Feder umfaßt, die den Ring (12), beaufschlagt gegen das ihn tragende freie Ende (1) des Elements, in Abwesenheit einer äußeren Beaufschlagung hält.

5. Anordnung nach einem der vorhergehenden Ansprüche, dadurch gekennzeichnet, daß der Ring (12, 42) oder wenigstens seine Außenfläche von einer Farbe ist, die gegen das ihn nicht tragende Element (2) kontrastiert.
